# FASCICULE DE BREVET EUROPEEN

(11) **EP 3 560 015 B1**
(45) Date de publication et mention de la délivrance du brevet: **16.11.2022**
(21) Numéro de dépôt: 17821698.2
(22) Date de dépôt: 08.12.2017
(51) Int. Cl.: H01M 8/04089, H01M 8/04119, H01M 8/04223, H01M 8/1018

(54) **SYSTÈME À PILE À COMBUSTIBLE, ET PROCÉDÉ DE PILOTAGE ASSOCIÉ**
SYSTEM MIT EINEM BRENNSTOFFZELLENSTAPEL UND ZUGEHÖRIGES STEUERUNGSVERFAHREN
SYSTEM COMPRISING A FUEL-CELL STACK, AND ASSOCIATED CONTROL METHOD

(30) Priorité: 20.12.2016 FR 1662832
(43) Date de publication de la demande: 30.10.2019
(73) Titulaire: SYMBIO FRANCE, 69200 Vénissieux (FR)
(72) Inventeur: PAGANELLI, Gino, 63040 Clermont-Ferrand Cedex 9 (FR)
(74) Mandataire: Lavoix
(86) Numéro de dépôt international: PCT/FR2017/053470
(87) Numéro de publication internationale: WO 2018/115630

(56) Documents cités:
- EP-A1- 1 018 774
- WO-A1-2015/118161
- US-A- 3 716 415
- US-A1- 2008 160 363

## Description

### DOMAINE DE L'INVENTION

La présente invention concerne les piles à combustible, notamment les piles à combustible alimentées en hydrogène.

Une pile à combustible permet la production directe d'énergie électrique par une réaction électrochimique, sans passer par une conversion en énergie mécanique.

Une pile à combustible comporte en général l'association en série d'éléments unitaires qui, chacun, sont constitués essentiellement d'une anode et d'une cathode séparées par une membrane polymère permettant le passage d'ions de l'anode à la cathode. Cette association est également appelée empilement, et comporte généralement des circuits d'alimentation en gaz, permettant le fonctionnement de la pile. L'anode alimentée en carburant, par exemple de l'hydrogène, est le siège d'une demi-réaction d'oxydation **H₂ (g) = 2 H⁺ (aq) + 2 e⁻.** Dans le même temps, la cathode alimentée en comburant, par exemple de l'oxygène pur ou contenu dans de l'air, est le siège d'une demi-réaction de réduction : **O₂ (g) + 4 H⁺ (aq) + 4 e⁻ = 2 H₂O (I)**

On a constaté que, pendant les phases de fonctionnement de la pile à combustible, de l'eau pouvait s'accumuler au niveau de l'anode, eau qu'il est nécessaire d'éliminer pour assurer un bon fonctionnement de la pile. Ainsi, il est connu de l'homme du métier d'alimenter la pile à combustible en créant une sur-stœchiométrie en hydrogène, ce qui permet non seulement d'évacuer l'eau mais également des impuretés gazeuses contenues dans l'hydrogène, ou ayant migré depuis la cathode.

En fonctionnement stœchiométrique, la quantité d'hydrogène fournie à la pile est sensiblement égale à la quantité consommée par la pile à combustible. Dans ce cas, la vitesse du gaz à la sortie des canaux internes d'alimentation en hydrogène sera nulle, laissant libre cours à l'accumulation d'impuretés gazeuses ou liquides et en particulier d'eau migrant naturellement à l'anode par rétrodiffusion depuis la cathode. Au contraire, une alimentation en sur-stœchiométrie signifie qu'on alimente la pile à combustible avec d'avantage d'hydrogène que ce qu'il est nécessaire pour que la réaction électrochimique s'effectue. De façon connue, une stœchiométrie située entre 1,1 et 2 peut être appliquée.

### ETAT DE LA TECHNIQUE

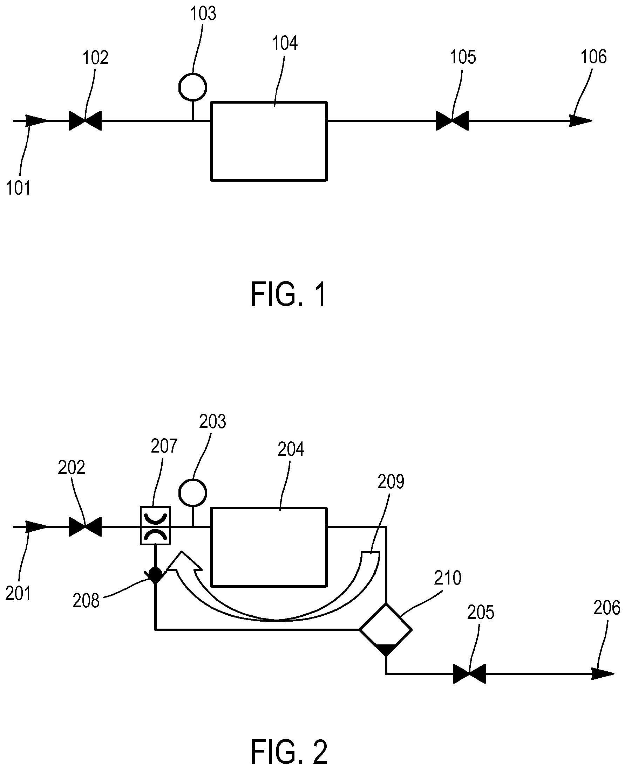

On connaît, dans l'état de la technique, différentes solutions permettant de satisfaire ce besoin de sur-stœchiométrie en hydrogène. Ainsi, dans une première solution montrée en figure 1, l'hydrogène pressurisé, par exemple à10 bar, est présent au niveau du tube d'alimentation en hydrogène 101. Une électrovanne de régulation de pression 102 associée à un capteur de pression 103 permet de régler la pression d'hydrogène à l'entrée de la pile à combustible 104. Une vanne de purge 105 sur la sortie anodique de la pile à combustible, est ouverte périodiquement pour générer la sur-stœchiométrie en hydrogène. L'hydrogène purgé s'échappe vers l'ambiant au niveau de la sortie 106. Cette solution permet une évacuation de l'eau à l'anode particulièrement efficace car lorsque la vanne de purge est ouverte un très grand débit d'hydrogène s'échappe de la pile.

Toutefois, la purge de l'hydrogène dans l'air ambiant s'avère peu satisfaisante pour plusieurs raisons :
- L'hydrogène purgée est perdu, ce qui conduit à une perte d'efficacité et donc de rendement de la pile à combustible,
- En outre, la perte d'hydrogène diminue l'autonomie des véhicules équipés d'une pile à combustible mettant en œuvre un tel système, ce qui compromet son utilisation avec des piles à combustible de plusieurs kilowatts. En effet, avec cette solution, la totalité de l'hydrogène en sur-stœchiométrie est perdue, ce qui peut représenter entre 10% et 100% de l'hydrogène consommé pour des stœchiométries allant de 1,1 à 2,
- En outre, une purge importante d'hydrogène dans l'air ambiant ne semble pas satisfaisante en termes de sécurité, et on sait que les réglementations en matière de fuite d'hydrogène dans l'atmosphère seront amenées à se renforcer dans les années à venir.

Une autre solution connue de l'état de la technique, montrée en figure 2, consiste à effectuer une recirculation l'hydrogène de la sortie anode vers l'entrée anode comme indiqué par la flèche 209. A cet effet, on utilise par exemple un éjecteur Venturi 207 associé à un clapet anti retour 208. Un séparateur d'eau 210 est normalement placé sur la boucle de recirculation de façon à capturer l'eau liquide. La recirculation permet d'atteindre une stœchiométrie d'hydrogène de l'ordre de 2 sans aucune perte d'hydrogène, et permet donc d'atteindre une vitesse de gaz suffisante pour éviter l'accumulation d'eau dans les canaux internes de la pile à combustible. Toutefois, cette solution nécessite l'installation d'une vanne de purge 205 en sortie du séparateur d'eau et son ouverture périodique pour éliminer les résidus d'eau à l'anode et les impuretés et en particulier l'azote ayant tendance à s'accumuler à l'anode. La fréquence des purges est plutôt dominée par le besoin de générer des décharges brutales d'hydrogènes périodiques pour évacuer les résidus d'eau à l'anode, et en pratique il est difficile de descendre à des pertes d'hydrogène inférieures à 3%. Par conséquent, cette solution ne s'avère pas satisfaisante en matière de pertes d'hydrogène, qui se révèlent trop élevées. Les documents EP1018774 et US2008/160363 décrivent des systèmes à pile à combustible comprenant des moyens de recirculation de l'hydrogène.

La présente invention vise à fournir une solution pour assurer une stœchiométrie d'hydrogène suffisamment élevée, sans rencontrer les inconvénients de l'état de la technique précités.

### BREVE DESCRIPTION DE L'INVENTION

Ainsi, l'invention concerne un système à pile à combustible comprenant un empilement de cellules électrochimiques formant une pile à combustible à membrane polymère échangeuse d'ions et un circuit d'alimentation en gaz carburant reliant un réservoir de gaz carburant à l'anode de la pile à combustible, le système étant caractérisé en ce qu'il comprend :
- Une vanne de purge d'hydrogène installée sur la sortie anodique de l'empilement,
- Un vase de réception de l'hydrogène purgé, et
- Des moyens de redirection de l'hydrogène purgé vers l'entrée anodique de la pile à combustible.

Un tel système permet de réaliser de nombreuses purges d'hydrogène sans créer de problèmes de sécurité puisque l'hydrogène purgé n'est pas relâché dans l'atmosphère, mais est redirigé vers l'entrée de la pile à combustible. A cet effet, l'invention concerne également un procédé de pilotage de pile à combustible qui sera ultérieurement décrit.

En outre, afin de proposer un système avec une efficacité renforcée, selon l'invention les moyens de redirection de l'hydrogène purgé comprennent un éjecteur de type Venturi.

L'éjecteur Venturi est avantageux en ce qu'il est sélectif, c'est-à-dire qu'il recircule préférentiellement l'hydrogène plutôt que les gaz impurs présentant une plus grande densité. Ainsi, l'azote issu de la sortie anodique de la pile n'est pas redirigé vers l'entrée anodique de la pile mais reste piégé dans le vase de réception.

Un autre avantage de l'éjecteur Venture est que, de par son principe de fonctionnement qui tend à générer le vide, on atteint des pressions dans le vase inférieures à la pression atmosphérique. La dépression ainsi créée rend particulièrement efficace la purge d'hydrogène successive de par la vitesse de gaz générée par la différence de pression. L'invention permet donc d'élimer efficacement l'eau des canaux anodiques sans générer de perte d'hydrogène.

Pour rappel, la présence d'eau résiduelle dans les canaux anodiques conduit à une dégradation progressive des performances de la pile à combustible, puisque l'accumulation d'eau conduit à un noyage de la surface active de la pile, qui ne peut alors plus remplir son rôle.

Ainsi que mentionné précédemment, l'éjecteur Venturi étant sélectif, les gaz impurs tels que l'azote ne sont pas redirigés vers l'entrée de la pile à combustible. Il est donc utile, dans un mode de réalisation particulier de l'invention, de prévoir des moyens pour évacuer cet azote.

Ainsi, dans un exemple de réalisation, un système à pile à combustible selon l'invention comprend en outre un capteur de mesure de la pression dans le vase de réception d'hydrogène et des moyens de purge du vase de réception d'hydrogène, lorsque la pression dans le vase de réception devient supérieure à la pression atmosphérique.

Les moyens de purge du vase de réception d'hydrogène comprennent par exemple une vanne. Cette vanne n'est ouverte que lorsque la pression dans le vase de réception est supérieure à la pression atmosphérique, pour éviter que l'air ambiant ne pénètre dans le vase de réception lors d'une ouverture de vanne. Cette vanne sert également à purger l'eau présente dans le vase de réception d'hydrogène, qui joue également le rôle de séparateur d'eau.

Ainsi que précédemment mentionné, l'invention concerne également un procédé de pilotage d'un système de pile à combustible comme décrit ci-dessus, comprenant les étapes suivantes :
- Une étape d'alimentation en hydrogène de la partie anodique de la pile à combustible,
- Une étape de purge de l'hydrogène résiduel en sortie anodique de la pile à combustible en direction d'un vase de réception, et
- Une étape de redirection de l'hydrogène purgé depuis le vase de réception vers l'entrée anodique de la pile à combustible.

Ces étapes sont appelées à être effectuées autant de fois que nécessaire. En effet, étant donné que l'hydrogène n'est pas perdu puisqu'il est redirigé vers le système, on ne déplore pas de pertes d'hydrogène, et on peut donc effectuer plusieurs fois le cycle de purge.

Contrairement à une des solutions de l'état de la technique où la purge de l'hydrogène était effectuée directement dans l'air ambiant, ici on purge en direction d'un vase de réception, qui présente une pression inférieure à la pression atmosphérique. Ainsi, la différence de pression entre la sortie du circuit anodique et le vase est importante, ce qui rend les purges successives, communément appelées « coups de bélier » plus efficaces

Dans un mode de réalisation particulier de l'invention, l'étape de purge de l'hydrogène résiduel correspond à une étape d'ouverture d'une vanne installée sur la sortie anodique de la pile à combustible. La durée de la purge correspond alors à un temps d'ouverture de la vanne, qui doit être déterminé de façon à déplacer l'ensemble du volume anodique.

Dans un autre mode de réalisation, l'invention comprend en outre une étape de purge du vase de réception vers l'atmosphère. Cette étape est avantageusement effectuée lorsque la pression dans le vase de réception devient supérieure à la pression atmosphérique, pour des raisons précédemment explicitées.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- Les figures 1 et 2, déjà décrites, présente des systèmes de l'état de la technique,
- La figure 3 présente un système selon l'invention, et
- La figure 4 est un graphe montrant l'évolution de la pression dans le vase de réception d'un système selon l'invention.

### DESCRIPTION DU MEILLEUR MODE DE REALISATION DE L'INVENTION

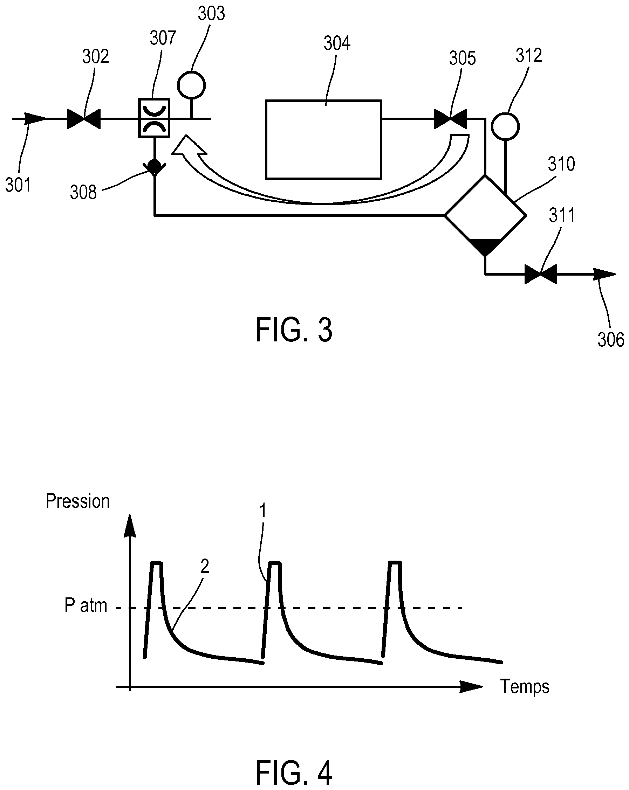

La figure 3 montre ainsi un système à pile à combustible dans lequel de l'hydrogène pressurisé, est présent au niveau du tube d'alimentation en hydrogène 301. Une électrovanne de régulation de pression 302 associée à un capteur de pression 303 permet de régler la pression d'hydrogène à l'entrée de la pile à combustible 304. Une vanne de purge 305 est placée en sortie anodique. L'hydrogène purgé lors de l'ouverture de la vanne 305 est dirigé vers un vase de réception 310. Un éjecteur Venturi 307 associé à un clapet anti retour 308 est installé de telle sorte à pouvoir aspirer l'hydrogène contenu dans le vase 310 et le rediriger vers l'entrée de la chambre anodique de la pile à combustible.

Le vase de réception 310 joue également le rôle de séparateur d'eau. Une vanne de purge du vase de réception 311, installée en sortie du vase 310, permet de purger vers l'extérieur les éléments qui ne sont pas redirigés vers l'entrée de la pile à combustible, à savoir :
- L'eau séparée dans le vase 310, issue des canaux anodique, et
- L'azote ou autre gaz impur, présent dans le vase 310, et qui ne sont préférentiellement pas recirculés par l'éjecteur Venturi 307.

Ce système permet donc avantageusement de permettre l'élimination efficace de l'eau des canaux anodiques sans générer de perte d'hydrogène, et sans risquer de polluer la pile à combustible par une réinjection d'azote ou autre gaz impur.

Nous allons maintenant décrire le pilotage d'un tel système, en s'appuyant en outre sur la figure 4 qui montre l'évolution de la pression à l'intérieur du vase 310, mesurée par le capteur 312.

Dans une première phase 1, on constate une augmentation de la pression. Cette phase correspond à l'ouverture de la vanne de purge 305, qui conduit à une purge de l'hydrogène résiduel de la sortie anodique de la pile vers le vase de réception 310. La durée de cette première phase, qui correspond au temps d'ouverture de la vanne, doit être suffisante pour assurer une sur stœchiométrie suffisante au sein de la pile à combustible par exemple entre 0.5 et 10 secondes. En outre, le prolongement de l'ouverture de la vanne de purge 305 ne conduirait pas à une perte d'hydrogène puisqu'il serait recirculé par l'éjecteur. On évitera toutefois de la maintenir ouverte trop longtemps de façon à permettre une périodicité suffisante des purges, par exemple entre 2 et 10 fois par minutes.

Une fois la vanne 305 fermée, on entre alors dans la phase 2, au cours de laquelle l'éjecteur Venturi vide le vase 310 par aspiration de l'hydrogène pour le rediriger vers l'entrée de la pile. La durée de la deuxième phase doit être suffisante pour atteindre une dépression suffisante au sein du vase 310 mais ne doit pas être trop longue de façon à permettre une périodicité suffisante des purges. Par exemple la durée de la phase 2 peut être réglée entre 2 et 10 secondes. Le vase 310 joue également le rôle de séparateur d'eau et il faut évacuer cette eau vers l'ambiant 306 au moyen d'une vanne de purge du vase de réception 311. Cette vanne peut être commandée périodiquement. Toutefois, ainsi que mentionné précédemment, l'ouverture de la vanne 311 est effectuée uniquement lorsque la pression dans le vase indiquée par le capteur de pression 312 est supérieure à la pression atmosphérique.

Dans un autre exemple de réalisation, non illustré sur les figures, la vanne 311 peut être remplacée par un orifice calibré permettant de générer un échappement contrôlé, associé à un clapet anti retour pour éviter la réintroduction d'air ambiant dans le vase 310.

En outre, comme indiqué précédemment, l'éjecteur Venturi est naturellement sélectif, c'est-à-dire que la section de l'orifice de recirculation est calibrée pour l'hydrogène. La présence d'un gaz plus dense mélangé avec l'hydrogène, comme l'azote par exemple, va engendrer une saturation de l'effet venturi et le vase 310 ne pourra plus atteindre le même niveau de vide.

Ainsi, si l'on détecte, au cours d'une phase 2, que la pression dans le vase 310 ne descend plus en dessous d'un certain niveau prédéterminé, cela signifie qu'une quantité d'azote trop importante s'est accumulée dans le vase. Dans un exemple, on commande alors l'ouverture de la vanne 311 pour éliminer l'azote tout en minimisant l'hydrogène perdu. Ceci permet de minimiser la perte d'hydrogène à des valeurs inférieures à 1%

## Revendications

1. Système à pile à combustible comprenant un empilement de cellules électrochimiques formant pile à combustible à membrane polymère échangeuse d'ions et un circuit d'alimentation en gaz carburant reliant un réservoir de gaz carburant à l'anode de la pile à combustible, le système étant **caractérisé en ce qu'**il comprend :
- Une vanne de purge d'hydrogène (305) installée sur la sortie anodique de l'empilement,
- Un vase de réception (310) de l'hydrogène purgé, et
- Des moyens de redirection de l'hydrogène purgé vers l'entrée anodique de la pile à combustible **caractérisé en ce que** lesdits moyens comprennent un éjecteur sélectif de type Venturi réalisé de manière à recirculer préférentiellement l'hydrogène et **en ce que** l'orifice de recirculation de l'éjecteur est calibrée pour l'hydrogène.

2. Système à pile à combustible selon la revendication 1, comprenant en outre un capteur de mesure de la pression (312) dans le vase de réception d'hydrogène.

3. Système à pile à combustible selon l'une des revendications précédentes, comprenant des moyens de purge (311) du vase de réception d'hydrogène, lorsque la pression dans le vase de réception devient supérieure à la pression atmosphérique.

4. Procédé de pilotage d'un système à pile à combustible selon les revendications 1 à 3, comprenant les étapes suivantes :
- Une étape d'alimentation en hydrogène de la partie anodique de la pile à combustible,
- Une étape de purge de l'hydrogène résiduel en sortie anodique de la pile à combustible, en direction d'un vase de réception, et
- Une étape de redirection sélective de l'hydrogène purgé depuis le vase de réception vers l'entrée anodique de la pile à combustible.

5. Procédé de pilotage selon la revendication 4, dans lequel l'étape de purge de l'hydrogène résiduel correspond à une étape d'ouverture d'une vanne installée sur la sortie anodique de la pile à combustible.

6. Procédé de pilotage selon la revendication 4 ou 5, comprenant en outre une étape de purge du vase de réception vers l'atmosphère.

7. Procédé de pilotage selon la revendication 6, dans lequel l'étape de purge du vase de réception est effectuée lorsque la pression dans le vase de réception devient supérieure à la pression atmosphérique.

## Patentansprüche

1. Brennstoffzellensystem, umfassend einen Stapel elektrochemischer Zellen, der eine Brennstoffzelle mit lonentauscher-Polymermembran bildet, und einen Brenngas-Versorgungskreis, der einen Brenngasbehälter mit der Anode der Brennstoffzelle verbindet, wobei das System **dadurch gekennzeichnet ist, dass** es umfasst:
- ein Wasserstoff-Ablassventil (305), das am Anodenausgang des Stapels installiert ist,
- einen Auffangbehälter (310) des abgelassenen Wasserstoffs, und
- Mittel zum Umleiten des abgelassenen Wasserstoffs zum Anodeneingang der Brennstoffzelle,
**dadurch gekennzeichnet, dass** die Mittel einen selektiven Ejektor vom Typ Venturi umfassen, der derart ausgeführt ist, dass vorzugsweise Wasserstoff rezirkuliert wird und dass die Rezirkulationsöffnung des Ejektors für Wasserstoff kalibriert ist.

2. Brennstoffzellensystem nach Anspruch 1, umfassend ferner einen Sensor zur Messung des Drucks (312) im Wasserstoff-Auffangbehälter.

3. Brennstoffzellensystem nach einem der vorangehenden Ansprüche, umfassend Mittel zum Entleeren (311) des Wasserstoff-Auffangbehälters, wenn der Druck im Auffangbehälter größer als der atmosphärische Druck wird.

4. Verfahren zum Steuern eines Brennstoffzellensystems nach den Ansprüchen 1 bis 3, das die folgenden Schritte umfasst:
- einen Schritt des Versorgens des Anodenteils der Brennstoffzelle mit Wasserstoff,
- einen Schritt des Ablassens des verbliebenen Wasserstoffs am Anodenausgang der Brennstoffzelle in Richtung eines Auffangbehälters, und
- einen Schritt des selektiven Umleitens des aus dem Auffangbehälter abgelassenen Wasserstoffs zum Anodeneingang der Brennstoffzelle.

5. Steuerungsverfahren nach Anspruch 4, wobei der Schritt des Ablassens des verbliebenen Wasserstoffs einem Schritt des Öffnens eines Ventils entspricht, das am Anodenausgang der Brennstoffzelle installiert ist.

6. Steuerungsverfahren nach Anspruch 4 oder 5, umfassend ferner einen Schritt des Entleerens des Auffangbehälters in die Atmosphäre.

7. Steuerungsverfahren nach Anspruch 6, wobei der Schritt des Entleerens des Auffangbehälters durchgeführt wird, wenn der Druck im Auffangbehälter größer als der atmosphärische Druck wird.

## Claims

1. A fuel cell system comprising a stack of electrochemical cells forming a fuel cell with ion-exchanger polymer membrane and a feeder circuit for fuel gas linking a fuel gas tank with the anode of the fuel cell, the system being **characterized in that** it comprises:
- A hydrogen purge valve (305) installed at the anode outlet of the stack,
- A receiving vessel (310) for the hydrogen, which was purged, and
- Means of redirecting the purged hydrogen toward the anode inlet of the fuel cell, **characterized in that** said means comprises a Venturi selective ejector produced to preferentially recirculate hydrogen, and **in that** the recirculation orifice of the ejector is calibrated for hydrogen.

2. The fuel cell system according to claim 1, further comprising a pressure measurement sensor (312) in the receiving vessel for hydrogen.

3. The fuel cell system according to any of the preceding claims, comprising means of purging (311) of the receiving vessel for hydrogen, when the pressure in the receiving vessel becomes higher than the atmospheric pressure.

4. A method for controlling a fuel cell according to claims 1 to 3, comprising the following steps:
- A step of feeding hydrogen into the anode part of the fuel cell,
- A step of purging residual hydrogen at the anode outlet of the fuel cell, towards the receiving vessel, and
- A step of selectively redirecting the purged hydrogen from the receiving vessel to the anode inlet of the fuel cell.

5. The control method according to claim 4, wherein the step of purging residual hydrogen corresponds to a step of opening a valve installed on the anode outlet of the fuel cell.

6. The control method according to claim 4 or 5, further comprising a step of purging the receiving vessel towards the atmosphere

7. The control method according to claim 6, wherein the step of purging the receiving vessel is carried out when the pressure in the receiving vessel becomes higher than the atmospheric pressure.
